# EUROPÄISCHE PATENTSCHRIFT

(11) **EP 1 603 782 B1**
(45) Veröffentlichungstag und Bekanntmachung des Hinweises auf die Patenterteilung: **02.11.2006**
(21) Anmeldenummer: 04764935.5
(22) Anmeldetag: 08.09.2004
(51) Int. Cl.: B60T 10/02

(54) **KRAFTFAHRZEUGANTRIEB MIT EINEM WASSERRETARDER**
AUTOMOTIVE DRIVE COMPRISING A WATER-BASED RETARDER
ENTRAINEMENT DE VEHICULE A MOTEUR A RALENTISSEUR A EAU

(30) Priorität: 15.09.2003 DE 10342869
(43) Veröffentlichungstag der Anmeldung: 14.12.2005
(73) Patentinhaber: Voith Turbo GmbH & Co. KG, 89522 Heidenheim (DE)
(72) Erfinder: LAUKEMANN, Dieter, 74541 Vellberg (DE)
(74) Vertreter: Dr. Weitzel & Partner
(86) Internationale Anmeldenummer: PCT/EP2004/009992
(87) Internationale Veröffentlichungsnummer: WO 2005/025957

(56) Entgegenhaltungen:
- DE-A- 10 054 078
- US-A- 4 836 341
- US-A- 5 794 588

## Beschreibung

Die vorliegende Erfindung betrifft einen Kraftfahrzeugantrieb mit einem Wasserretarder, das heißt mit einem Retarder, der in den Kühlkreislauf eines Kraftfahrzeugs integriert ist und dessen Arbeitsmedium das Kühlmedium des Fahrzeugs ist. Die Erfindung betrifft insbesondere ein Verfahren zum Einstellen der optimalen Restmenge an Arbeitsmedium im Arbeitsraum des Retarders im Nichtbremsbetrieb.

Retarder sind seit langem und weithin bekannt. Während herkömmliche Retarder in der Regel mit einem Öl als Arbeitsmedium betrieben wurden, geht man in jüngerer Zeit mehr und mehr dazu über, den Retarder direkt im Kühlkreislauf des Fahrzeugs anzuordnen und das Kühlmedium des Fahrzeugs zugleich als Arbeitsmedium des Retarders zu nutzen. Dies bringt den Vorteil mit sich, dass auf einen separaten Ölkreislauf zum Betrieb des Retarders verzichtet werden kann. Die im Retarder anfallende Wärme kann unmittelbar über den Kühlkreislauf des Fahrzeugs abgeführt werden.

Im Nichtbremsbetrieb soll die Verlustleistung des Retarders möglichst gering ausfallen. Dazu wird der Retarder beim Übergang vom Bremsbetrieb zum Nichtbremsbetrieb weitgehend entleert. Optimalerweise verbleibt jedoch eine vorgegebene Restmenge an Arbeitsmedium im Arbeitsraum des Retarders. Bisher war es üblich, das Arbeitsmedium bis auf die vorgegebene Restmenge durch den im Retarder erzeugten Druck oder gegebenenfalls durch zusätzliche von außen aufgeprägte Druckimpulse zu entladen. Durch eine absolute Dichtigkeit der den Arbeitsraum abdichtenden Dichtelemente wurde ein Leckagestrom in den Arbeitsraum des Retarders vermieden und so die optimale Restmenge an Arbeitsmedium im Arbeitsraum im Nichtbremsbetrieb konstant gehalten.

Die Notwendigkeit der absoluten Dichtigkeit von allen den Arbeitsraum abdichtenden Elementen, wie zum Beispiel Wellendichtungen oder im Kühlkreislauf angeordneten Ventilen, die den Zweig des Kühlkreislaufes, in welchem der Retarder angeordnet ist, im Nichtbremsbetrieb gegenüber dem verbleibenden Kühlkreislauf absperren, hat jedoch Nachteile. So können ausschließlich äußerst hochwertige, präzise hergestellte Elemente verwendet werden, die teuer sind. Zudem führt bereits geringer Verschleiß nach kurzer Betriebszeit dazu, dass diese Elemente ausgetauscht werden müssen.

DE 100 54 078 A beschreibt einen Kraftfahrzeugantrieb mit einem Retarder im Kühlkreislauf eines Kraftfahrzeugs, bei welchem eine Leckageleitung am Retarder angeschlossen ist, mittels welcher jegliche Restmenge von Arbeitmedium oder Luft aus dem Arbeitraum des Retarders im Nichtbremsbetrieb abgezogen wird. Die aus diesem Dokument bekannten Merkmale sind im Oberbegriff von Anspruch 1 zusammengefasst.

Der Erfindung liegt die Aufgabe zugrunde, einen Kraftfahrzeugantrieb mit einem Retarder im Kühlkreislauf eines Kraftfahrzeugs darzustellen, welcher gegenüber dem Stand der Technik verbessert ist und insbesondere die oben genannten Nachteile vermeidet. Ferner soll ein Verfahren dargestellt werden, dass zuverlässig eine optimale Restmenge an Arbeitsmedium im Arbeitsraum eines solchen Retarders im Nichtbremsbetrieb einstellt.

Die erfindungsgemäße Aufgabe wird durch einen Kraftfahrzeugantrieb und ein Verfahren gemäß der unabhängigen Ansprüche gelöst. Die abhängigen Ansprüche beschreiben besonders vorteilhafte Weiterbildungen der Erfindung.

Der erfindungsgemäße Kraftfahrzeugantrieb gemäß Anspruch 1 weist einen Retarder auf, dessen Arbeitsmedium das Kühlmedium des Fahrzeugs ist. Das Arbeitsmedium wird aus dem Kühlkreislauf des Fahrzeugs über einen Einlass dem Retarder zugeführt, strömt in den Arbeitsraum des Retarders, welcher durch das Rotorschaufelrad und das Statorschaufelrad des Retarders gebildet wird, und wird über einen Auslass wieder an den Kühlkreislauf abgegeben. Erfindungsgemäß weist der Retarder einen zusätzlichen Auslass zum Abführen der überschüssigen Restkühlmediummenge aus dem Arbeitsraum des Retarders im Nichtbremsbetrieb auf. Dieser zusätzliche Auslass wird nachfolgend als Entleerungsauslass bezeichnet. Der Entleerungsauslass führt das überschüssige Arbeitsmedium beziehungsweise Kühlmedium ebenfalls in den Kühlkreislauf des Fahrzeugs ab und ist daher arbeitsmediumführend mit dem Kühlkreislauf verbunden. Um eine optimale Restmenge an Arbeitsmedium im Nichtbremsbetrieb im Arbeitsraum des Retarders einzustellen, ist am Entleerungsauslass eine Leckagepumpe angeschlossen, welche das Arbeitsmedium aus dem Arbeitsraum über den Entleerungsauslass in den Kühlkreislauf pumpt.

Um auf einfache Art sicherzustellen, dass die optimale Restarbeitsmediummenge im Retarderraum verbleibt, ist die Abgriffstelle der Leckagepumpe vorteilhaft derart gestaltet, dass nur die überschüssige Menge an Arbeitsmedium abgepumpt wird. Die Abgriffstelle liegt vorteilhaft in Strömungsrichtung hinter im Stator des Retarders eingebrachten Auslassbohrungen. Besonders vorteilhaft kann in Strömungsrichtung vor der Abgriffstelle eine Überlaufkante vorgesehen sein, so dass nur "überlaufendes" Arbeitsmedium abgepumpt wird.

Durch die erfindungsgemäß angeordnete Leckagepumpe ist es nun nicht mehr notwendig, Dichtungen und gegebenenfalls Ventile, welche den Arbeitsraum des Retarders abdichten, absolut dicht auszuführen. Dies betrifft insbesondere solche Dichtungen und Ventile, welche beidseits mit dem Kühlmedium des Kühlkreislaufs beaufschlagt sind. Beispielsweise sind solche Dichtungen Wellendichtungen des Retarderrotors, die mit dem Kühlmedium des Fahrzeugs geschmiert und/oder gekühlt werden. Die genannten Ventile sind insbesondere diejenigen, welche den Zweig des Kühlkreislaufes, in dem der Retarder angeordnet ist, vom restlichen Fahrzeugkühlkreislauf abtrennen.

Durch eine gezielte Undichtigkeit beispielsweise der kühlmediumbeaufschlagten Rotordichtungen kann sogar vorteilhaft ein vorgegebener Leckagestrom in den Arbeitsraum des Retarders im Nichtbremsbetrieb eingestellt werden, welcher durch die erfindungsgemäß angeordnete Leckagepumpe wieder abgeführt wird. Durch diesen Leckagestrom wird der Retarder und die Wellendichtung(en) effektiv gekühlt, da Wärme über diesen Leckagestrom in den Kühlkreislauf des Kraftfahrzeugs abgeleitet wird. Da aufgrund der erfindungsgemäß angeordneten Leckagepumpe gleichzeitig die optimale Restmenge an Arbeitsmedium im Nichtbremsbetrieb im Arbeitsraum des Retarders aufrechterhalten wird, wird trotz Undichtigkeit der Abdichtungen des Arbeitsraums ein Anstieg der Verlustleistung des Retarders im Leerlauf zuverlässig vermieden.

Die Wellendichtungen, die den Retarder gegenüber der Umgebung abdichten, sind vorteilhaft absolut dicht ausgeführt, um einen unkontrollierten Austritt von Kühlmedium beziehungsweise Arbeitsmedium aus dem Retarder in die Umgebung zu vermeiden.

Die erfindungsgemäß angeordnete Leckagepumpe wird vorteilhaft durch einen Elektromotor, die Retarderwelle oder die Druckluftversorgung des Fahrzeugs angetrieben. Besonders vorteilhaft ist die Leckagepumpe unmittelbar auf der Retarderwelle angeordnet, so dass auf zwischengeschaltete antriebsmomentübertragende Elemente verzichtet werden kann. Dadurch wird die Leckagepumpe besonders verlustarm angetrieben. In einer besonders vorteilhaften Ausgestaltung kann auf einen zusätzlichen Antrieb für die Leckagepumpe dadurch verzichtet werden, dass die Leckagepumpe als Wasserstrahlpumpe ausgebildet ist, die im Kühlkreislauf des Fahrzeugs integriert ist. In einer solchen Ausführung wird die Antriebsarbeit der Leckagepumpe mittelbar durch die im Fahrzeugkühlkreislauf angeordnete Wasserpumpe geleistet. Besonders vorteilhaft ist ein Bypass vorgesehen, um die Leckagepumpe im Bremsbetrieb des Retarders zu umgehen, da dann Arbeitsmedium aus dem Arbeitsraum des Retarders ausschließlich über den genannten Auslass zum Abführen von Arbeitsmedium abgeführt werden kann.

Die Leckagepumpe kann ferner als Kolbenpumpe, als Membranpumpe oder als Kreiselpumpe ausgeführt sein. Jedoch sind auch weitere Ausführungen denkbar.

Nachfolgend soll die Erfindung anhand eines Ausführungsbeispiels und den beigefügten Figuren näher beschrieben werden.

Es zeigen:
- Figur 1: eine schematische Darstellung eines Ausführungsbeispiels eines erfindungsgemäß ausgestalteten Kraftfahrzeugantriebsstranges;
- Figur 2: die konstruktive Ausgestaltung einer Abgriffstelle der Leckagepumpe gemäß eines Ausführungsbeispiels.

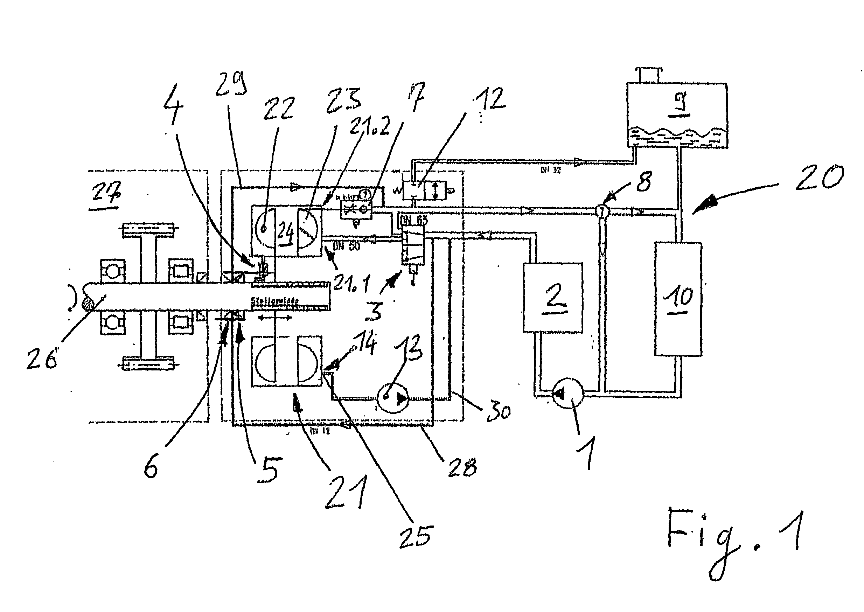

In der Figur 1 erkennt man zunächst den Kühlkreislauf 20 des Kraftfahrzeugs beziehungsweise des Kraftfahrzeugantriebs. Das Kühlmedium, vorliegend Wasser oder ein Wasser-Glykol-Gemisch, wird mittels der Kühlwasserpumpe 1 im Kühlkreislauf umgewälzt. Mittels des Kühlmediums wird der Motor 2 gekühlt und im Bremsbetrieb zugleich der Retarder 21 betrieben. Das Kühlmedium seinerseits wird mittels des Kühlers 10 gekühlt, welcher als üblicher Kraftfahrzeugkühler ausgebildet ist. In Strömungsrichtung (siehe Pfeile im Kühlkreislauf) vor dem Kühler 10 ist ein Thermostat beziehungsweise ein Thermostatventil 8 angeordnet, welches den Kühlmittelstrom in eine Leitung zum Kühler 10 und einen Bypass zu demselben aufteilt. Je nach erforderlicher Kühlung ist eine Aufteilung zwischen Kühlung des gesamten Kühlmittelstroms, das heißt das gesamte Kühlmittel wird durch den Kühler 10 geleitet, und Bypass des gesamten Kühlmittelstroms am Kühler 10 vorbei möglich.

Schwankungen im Kühlmittelstrom werden mittels des Ausgleichsbehälters 9 ausgeglichen. Ein unerwünschter Überdruck im Kühlkreislauf, beispielsweise bei schnellem Entleeren des Retarders beim Übergang vom Bremsbetrieb zum Nichtbremsbetrieb können durch das Druckbegrenzungsventil 12 und der in dem Ausgleichsbehälter 9 mündenden Leitung ausgeglichen werden.

Mittels des 3/2-Wegeventils 3 kann der Kühlkreislaufzweig, in welchem der Retarder 21 angeordnet ist, zum übrigen Kühlkreislauf 20 zu- oder abgeschaltet werden. Im Bremsbetrieb strömt das Kühlmedium über die gezeigte Leitung (DN 50) zum Einlass 21.1. Über Kanäle im Stator 23 tritt das Kühlmedium in den Arbeitsraum 24 des Retarders, wo es den Rotor 22 "abbremst". Über Auslassbohrungen im Stator 23 wird das Kühlmedium/Arbeitsmedium in einen Entleerkanal, welcher im Statorgehäuse ausgebildet ist, geleitet und über den Auslass 21.2 aus dem Retarder abgeführt. Anschließend strömt es durch das Regelventil 7 zurück in den Kühlkreislauf des Fahrzeugs, wo es bei Bedarf mittels des Kühlers 10 gekühlt wird.

Der dargestellte Retarder ist, wie man sieht, als Retarder mit axial verschiebbarem Rotor 22 ausgebildet. Dazu ist der Rotor 22 auf der Rotorwelle 26 mittels eines Steilgewindes gelagert. Im Bremsbetrieb kann somit der Rotor 22 dicht an den Stator 23 herangefahren werden und im Nichtbremsbetrieb zum Minimieren der Verlustleistung in eine axial entfernte Position. Dieses An- und Abfahren erfolgt vorteilhaft automatisch.

Der Retarder ist auf der Rotorwelle 26, welche in das Getriebe 27 geführt ist, fliegend gelagert. Die den Arbeitsraum 24 gegenüber der Umgebung abdichtende Wellendichtung ist zweiteilig ausgeführt. Sie besteht wie dargestellt aus einer absolut dichten, äußeren Gleitringdichtung 6 und aus ei ner arbeitsmediumdurchlässigen Spezialdichtung 5. Der Raum zwischen beiden Dichtungen 5, 6 ist mittels der Leitung 28 mit Kühlmedium beaufschlagt, welches durch die Spezialdichtung am Rotor 26 entlang zu einer Drosselstelle, welche als Spaltdichtung 4 ausgeführt ist, strömt und dann weiter in den Arbeitsraum 24 des Retarders 21. Ferner kann das Kühlmedium auch über die Leitung 29, welche als abführende Leitung den Raum zwischen den Dichtungen 5, 6 mit dem Kühlkreislauf 20 verbindet, unmittelbar in den Kühlkreisl auf 20 zurückgeführt werden.

Zusätzlich zu dem Auslass 21.2 umfasst der Retarder einen Entleerungsauslass 25 zum Abführen von Arbeitsmedium aus dem Retarder im Nichtbremsbetrieb in den Kühlkreislauf 20. Der Entleerungsauslass 25 ist über die Leitung 30 mit dem Kühlkreislauf 20 an einer Stelle verbunden, welche in Strömungsrichtung vor dem 3/2-Wegeventil liegt. In die Leitung 30 ist eine Leckagepumpe 13 zum gezielten Abpumpen von überschüssigem Arbeitsmedium im Nichtbremsbetrieb aus dem Arbeitsraum des Retarders geschaltet.

Mittels dieser Leckagepumpe 13 kann beispielsweise Arbeitsmedium, welches im Nichtbremsbetrieb über die Wellendichtung 5 in den Arbeitsraum des Retarders strömt, in den Kühlkreislauf 20 abgepumpt werden, so dass die Verlustleistung des Retarders 21 im Nichtbremsbetrieb optimal gering gehalten wird. Ferner können Undichtigkeiten zwischen Kühlkreislauf 20 und dem Kreislaufzweig, in welchem der Retarder 21 angeordnet ist, beispielsweise des Ventils 3 oder des Ventils 7 ausgeglichen werden, indem die Leckageströme mittels der Pumpe 13 abgepumpt werden.

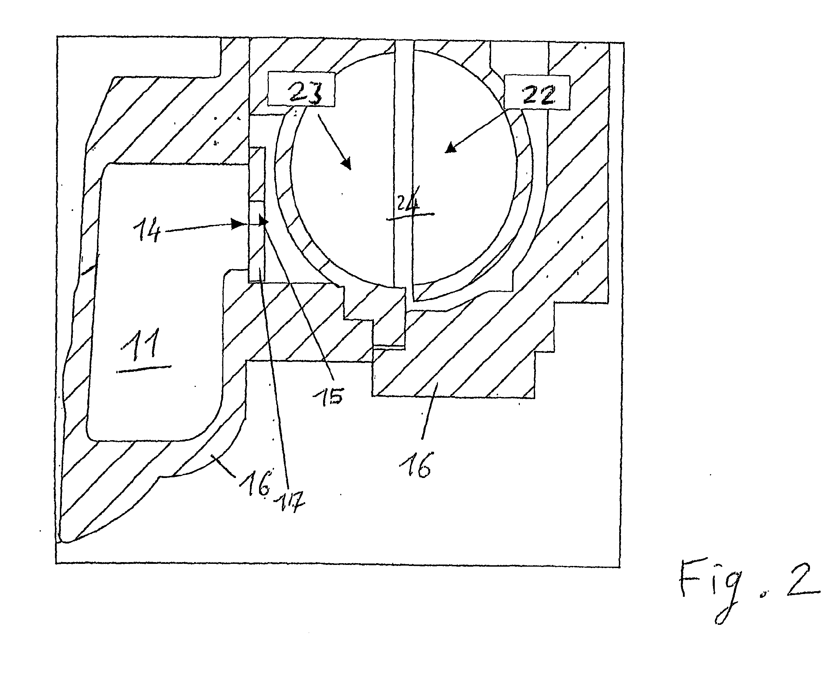

In der Figur 2 ist die konstruktive Ausgestaltung der Überlaufkante 14 im Stator 23 des Retarders 21 näher gezeigt.

Man erkennt wiederum den Rotor 22 und den Stator 23, welche den Arbeitsraum 24 miteinander ausbilden. Beide sind von einem Gehäuse 16 umschlossen.

In dem Gehäuse ist auf der Statorseite ein Entleerkanal 11 ausgebildet. In den Entleerkanal 11 wird das Arbeitsmedium aus dem Arbeitsraum 24 durch Auslassbohrungen (nicht gezeigt) im Stator 23 geleitet. Zwischen dem Entleerkanal 11 und dem Stator 23, das heißt zwischen Entleerkanal und der Wandung oder Schale des Stators 23, welche mit den genannten Auslassbohrungen versehen ist, ist eine Überlaufkante 14 ausgebildet.

Im gezeigten Ausführungsbeispiel wird die Überlaufkante 14 durch Vorsehen einer Ringscheibe 17 hergestellt, welche im Gehäuse 16 gelagert und mit einer Vielzahl von Bohrungen 15 in axialer Richtung des Retarders versehen ist. Im vorliegenden Beispiel ist die Ringscheibe stirnseitig in axialer Richtung an zwei Gehäusevorsprüngen des Gehäuses 16 gelagert und begrenzt den Entleerungskanal 11 in axialer Richtung. Durch die Bohrungen 15 wird einerseits die Überlaufkante 14 ausgebildet, und andererseits stellen sie eine Auslassdrossel dar, deren Drosselwirkung durch den Querschnitt und die Anzahl der Bohrungen 15 eingestellt wird.

Anstelle der gezeigten Bohrungen 15 könnten auch Langlöcher oder Schlitze, beispielsweise ein umlaufender Schlitz, vorgesehen sein.

Wie oben dargestellt, kann der Antrieb der Leckagepumpe 13 verschiedenartig ausgeführt werden. Vorteilhaft ist die Leckagepumpe 13 beispielsweise auf der Rotorwelle 26 des Retarders 21 angeordnet oder wird mittelbar durch die Rotorwelle 26 angetrieben. Ein Einschalten der Leckagepumpe 13 ist nur im Nichtbremsbetrieb notwendig. Es ist jedoch auch möglich, die Leckagepumpe 13 auch im Bremsbetrieb des Retarders von der Rotorwelle 26 antreiben zu lassen, um zusätzlich Antriebsenergie aus dem Retarder 21 abzuführen und damit das Bremsmoment zu erhöhen.

### Bezugszeichenliste

- 1: Wasserpumpe
- 2: Motor
- 3: 3/2-Wegeventil
- 4: Spaltringdichtung
- 5: Spezialdichtung
- 6: Gleitringdichtung
- 7: Regelventi
- 8: Thermostat
- 9: Ausgleichsbehälter
- 10: Kühler
- 11: Entleerkanal
- 12: Druckbegrenzungsventil
- 13: Leckagepumpe
- 14: Überlaufkante
- 15: Bohrungen
- 16: Gehäuse
- 17: Ringscheibe
- 20: Kühlkreislauf
- 21: Retarder
- 21.1: Einlass
- 21.2: Auslass
- 22: Rotor
- 23: Stator
- 24: Arbeitsraum
- 25: Entleerungsauslass
- 26: Rotorwelle
- 27: Getriebe
- 28: Leitung
- 29: Leitung
- 30: Leitung

## Patentansprüche

1. Kraftfahrzeugantrieb, umfassend
1.1 einen Kühlkreislauf (20) mit einem Kühlmedium, wobei das Kühlmedium im Kühlkreislauf mittels einer Pumpe (1) umgewälzt wird;
1.2 einen Retarder (21) mit einem Rotor (22) und einem Stator (23), die miteinander einen torusförmigen Arbeitsraum (24) ausbilden, wobei das Arbeitsmedium des Retarders (21) das Kühlmedium ist;
1.3 der Retarder (21) weist einen Einlass (21.1) zum Zuführen von Arbeitsmedium aus dem Kühlkreislauf (20) und einen Auslass (21.2) zum Abführen von Arbeitsmedium in den Kühlkreislauf (20) auf;
1.4 der Retarder weist einen zusätzlichen Entleerungsauslass (25) auf, der arbeitsmediumführend mit dem Kühlkreislauf (20) verbunden ist; **gekennzeichnet durch** die folgenden Merkmale:
1.5 in die Verbindung zwischen Entleerungsauslass (25) und Kühlkreislauf (20) ist eine Leckagepumpe (13) geschaltet, welche zusätzlich zu der Pumpe (1), welche das Kühlmedium im Kühlkreislauf (20) umwälzt, vorgesehen ist.

2. Kraftfahrzeugantrieb gemäß Anspruch 1, **dadurch gekennzeichnet, dass** der Entleerungsauslass (25) eine Abgriffstelle für Arbeitsmedium aufweist, die hinter im Stator (23) eingebrachten Auslassbohrungen positioniert ist, derart, dass stets eine vorbestimmte Restmenge von Arbeitsmedium im Arbeitsraum (24) verbleibt.

3. Kraftfahrzeugantrieb gemäß Anspruch 2, **dadurch gekennzeichnet, dass** vor der Abgriffstelle eine Überlaufkante (14) vorgesehen ist.

4. Kraftfahrzeugantrieb gemäß einem der Ansprüche 1 bis 3, **dadurch gekennzeichnet, dass** der Retarder (21) eine Rotorwelle (26) aufweist, welche gegenüber dem Retardergehäuse mittels mindestens einer Dichtung (5, 6) abgedichtet ist, wobei die Dichtung (5, 6) am Kühlkreislauf (20) derart angeschlossen ist, dass sie durch zugeführtes Kühlmedium beaufschlagt wird;
4.1 die Abdichtung der Rotorwelle (26) gegenüber dem Retardergehäuse mittels der Dichtung (5, 6) ist gegenüber der Umgebung im wesentlichen vollständig dicht und gegenüber dem Arbeitsraum (24) des Retarders (21) um ein vorgegebenes Leckageausmaß durchlässig.

5. Kraftfahrzeugantrieb gemäß einem der Ansprüche 1 bis 4, **dadurch gekennzeichnet, dass** die Leckagepumpe (13) mit einem Elektromotor als Antrieb versehen ist oder durch die Rotorwelle (26) des Retarders (21), insbesondere direkt, angetrieben wird oder durch die Druckluftversorgung des Fahrzeugs angetrieben wird.

6. Kraftfahrzeugantrieb gemäß einem der Ansprüche 1 bis 5, **dadurch gekennzeichnet, dass** die Leckagepumpe (13) als Kolbenpumpe, Membranpumpe oder Kreiselpumpe ausgeführt ist.

7. Kraftfahrzeugantrieb gemäß einem der Ansprüche 1 bis 4, **dadurch gekennzeichnet, dass** die Leckagepumpe (13) als Wasserstrahlpumpe ausgeführt ist, welche im Kühlkreislauf (20) derart integriert ist, dass sie durch das im Kühlkreislauf (20) umgewälzte Kühlmedium angetrieben wird.

8. Verfahren zum Einstellen einer optimalen Restarbeitsmediummenge in einem Retarder (21), der in einem Kühlkreislauf (20) eines Kraftfahrzeugantriebs gemäß einem der Ansprüche 1 bis 7 angeordnet ist, umfassend den folgenden Schritt:
8.1 mittels der Leckagepumpe (13), welche zusätzlich zu der Pumpe (1), die das Kühlmedium im Kühlkreislauf (20) umwälzt, vorgesehen ist, wird im Nichtbremsbetrieb eine Menge an Arbeitsmedium, die eine vorgegebene Arbeitsmediummenge im Arbeitsraum (24) des Retarders (21) überschreitet, aus dem Arbeitsraum des Retarders in den Kühlkreislauf (20) abgepumpt.

9. Verfahren gemäß Anspruch 8, **dadurch gekennzeichnet, dass** die Leckagepumpe (13) unmittelbar auf der Rotorwelle (26) des Retarders (21) angeordnet ist oder mittelbar von dieser angetrieben wird und dass die Leckagepumpe (13) auch im Bremsbetrieb vom Retarder (21) angetrieben wird.

## Claims

1. A drive for a motor vehicle, comprising
1.1 a cooling circulation (20) with a cooling medium, with the cooling medium being circulated in the cooling circulation by means of a pump (1);
1.2 a retarder (21) with a rotor (22) and a stator (23) which jointly form a toroidal working chamber (24), with the working medium of the retarder (21) being the cooling medium;
1.3 the retarder (21) comprises an inlet (21.1) for supplying working medium from the cooling circulation (20) and an outlet (21.2) for discharging working medium into the cooling circulation (20);
1.4 the retarder comprises an additional discharge outlet (25) which is connected with the cooling circulation (20) in a manner guiding working medium;
1.5 a leakage pump (13) is switched into the connection between the discharge outlet (25) and the cooling circulation (20), which pump is provided in addition to the pump (1) which makes the cooling medium circulate in the cooling circulation (20).

2. A drive for a motor vehicle according to claim 1, **characterized in that** the discharge outlet (25) comprises a tapping point for the working medium which is positioned behind outlet bores incorporated in the stator (23), such that a predetermined residual quantity of working medium will remain in the working chamber (24).

3. A drive for a motor vehicle according to claim 2, **characterized in that** an overflow edge (14) is provided before the tapping point.

4. A drive for a motor vehicle according to one of the claims 1 to 3, **characterized in that** the retarder (21) comprises a rotor shaft (26) which is sealed against the retarder housing by means of at least one gasket (5, 6), with the gasket (5, 6) being connected to the cooling circulation (20) in such a way that it is pressurized by supplied cooling medium;
4.1 the sealing of the rotor shaft (26) against the retarder housing by means of the gasket (5, 6) is substantially completely tight against the ambient environment and permeable against the working chamber (24) of the retarder (21) by a predetermined amount of leakage.

5. A drive for a motor vehicle according to one of the claims 1 to 4, **characterized in that** the leakage pump (13) is provided with an electromotor as a drive or is driven by the rotor shaft (26) of the retarder (21), especially directly, or is driven by the compressed-air supply of the vehicle.

6. A drive for a motor vehicle according to one of the claims 1 to 5, **characterized in that** the leakage pump (13) is configured as a piston pump, membrane pump or rotary pump.

7. A drive for a motor vehicle according to one of the claims 1 to 4, **characterized in that** the leakage pump (13) is configured as a water-jet pump which is integrated in the cooling circulation (20) in such a way that it is driven by the cooling medium circulated in the cooling circulation (20).

8. A method for setting an optimal residual quantity of working medium in a retarder (21) which is arranged in a cooling circulation (20) of a motor vehicle drive according to one of the claims 1 to 7, comprising the following step:
8.1 in non-braking operation, a quantity of working medium exceeding a predetermined quantity of working medium in the working chamber (24) of the retarder (21) is pumped from the working chamber of the retarder into the cooling circulation (20) by means of the leakage pump (13) which is provided in addition to the pump (1) which circulates the cooling medium in the cooling circulation (20.

9. A method according to claim 8, **characterized in that** the leakage pump (13) is arranged directly on the rotor shaft (26) of the retarder (21) or is driven indirectly by the same, and that the leakage pump (13) is driven by the retarder (21) also in braking operation.

## Revendications

1. Entraînement pour véhicule automobile, comprenant
1.1 un circuit de refroidissement (20) avec un fluide de refroidissement, une pompe (1) faisant circuler le fluide de refroidissement dans le circuit de refroidissement ;
1.2 un ralentisseur (21) avec un rotor (22) et un stator (23) formant ensemble une enceinte de travail (24) de forme torique, le fluide de travail du ralentisseur (21) étant le fluide de refroidissement ;
1.3 le ralentisseur (21) comporte une entrée (21.1) pour le fluide de travail provenant du circuit de refroidissement (20) et une sortie (21.2) d'évacuation du fluide de travail dans le circuit de refroidissement (20) ;
1.4 le ralentisseur comporte une sortie supplémentaire (25) de vidange qui est reliée au circuit de refroidissement (20) par une liaison dans laquelle circule le fluide de travail ;
**caractérisé par** les particularités suivantes :
1.5 dans la liaison entre la sortie de vidange (25) et le circuit de refroidissement (20) est montée une pompe pour fluide en excès (13) qui est prévue en supplément de la pompe (1) faisant circuler le fluide de refroidissement dans le circuit de refroidissement (20).

2. Entraînement pour véhicule automobile selon la revendication 1, **caractérisé en ce que** la sortie de vidange (25) comporte un endroit de prélèvement du fluide de travail qui est positionné derrière des trous de sortie pratiqués dans le stator (23) de sorte qu'il reste toujours dans l'enceinte de travail (24) une quantité résiduelle prédéterminée de fluide de travail.

3. Entraînement pour véhicule automobile selon la revendication 2, **caractérisé en ce qu'**un bord de débordement (14) est prévu devant l'endroit de prélèvement.

4. Entraînement pour véhicule automobile selon l'une quelconque des revendications 1 à 3, **caractérisé en ce que** le ralentisseur (21) comporte un arbre de rotor (26) qui est isolé hermétiquement par rapport au boîtier du ralentisseur moyennant au moins un joint (5, 6), le joint (5, 6) étant raccordé au circuit de refroidissement (20) de manière à ce que le fluide de refroidissement acheminé le heurte ;
4.1 l'isolation de l'arbre (26) du rotor par rapport au boîtier du ralentisseur au moyen du joint (5, 6) est sensiblement complètement hermétique par rapport à son entourage et perméable à une quantité de fluide en excès prescrite par rapport à l'enceinte de travail (24) du ralentisseur (21).

5. Entraînement pour véhicule automobile selon l'une quelconque des revendications 1 à 4, **caractérisé en ce que** la pompe pour fluide en excès (13) est munie d'un moteur électrique faisant office d'entraînement ou est entraînée, notamment directement, par l'arbre (26) du rotor du ralentisseur (21) ou par l'alimentation en air comprimé du véhicule.

6. Entraînement pour véhicule automobile selon l'une quelconque des revendications 1 à 5, **caractérisé en ce que** la pompe pour fluide en excès (13) est réalisée sous forme de pompe à piston, de pompe à diaphragme ou de pompe centrifuge.

7. Entraînement pour véhicule automobile selon l'une quelconque des revendications 1 à 4, **caractérisé en ce que** la pompe pour fluide en excès (13) est réalisée sous forme de pompe à eau intégrée dans le circuit de refroidissement (20) de manière à être entraînée par le fluide de refroidissement circulant dans le circuit de refroidissement (20).

8. Procédé de réglage d'une quantité optimale de fluide de travail résiduel dans un ralentisseur (21) disposé dans un circuit de refroidissement (20) d'un entraînement pour véhicule automobile selon l'une quelconque des revendications 1 à 7,
comprenant l'étape suivante :
8.1 moyennant la pompe pour fluide en excès (13) prévue en supplément de la pompe (1) faisant circuler le fluide de refroidissement dans le circuit de refroidissement (20), on fait passer, en mode de non freinage, une quantité de fluide de travail contenue dans l'enceinte de travail (24) du ralentisseur (21) et dépassant une quantité de fluide de travail prescrite de l'enceinte de travail du ralentisseur dans le circuit de refroidissement (20).

9. Procédé selon la revendication 8, **caractérisé en ce que** la pompe pour fluide en excès (13) est disposée directement sur l'arbre (26) du rotor du ralentisseur (21) ou est entraînée indirectement par celui-ci et que la pompe pour fluide en excès (13) est aussi entraînée par le ralentisseur (21) en mode freinage.
